# EUROPEAN PATENT SPECIFICATION

(11) **EP 1 698 429 B1**
(45) Date of publication and mention of the grant of the patent: **14.05.2008**
(21) Application number: 06075508.9
(22) Date of filing: 03.03.2006
(51) Int. Cl.: B23P 15/00, B23C 3/35

(54) **Key manipulation system for a key cutting machine**
System zur Schlüsselhandhabung für eine Schlüsselschneidmaschine
Système de manipulation de clés pour une machine d'usinage de clés

(30) Priority: 04.03.2005 IT RE20050017
(43) Date of publication of application: 06.09.2006
(73) Proprietor: A.C.S. S.R.L., 42023 Cadelbosco di Sopra RE (IT)
(72) Inventor: Corradi, Cesare, 42023 Cadelbosco di Sopra Regio Emilia (IT)
(74) Representative: Corradini, Corrado

(56) References cited:
- EP-A- 0 027 433
- EP-A- 0 492 372
- EP-A- 1 354 654
- DATABASE EPODOC EUROPEAN PATENT OFFICE, THE HAGUE, NL; 1 December 2002 (2002-12-01), XP002383901 -& ES 2 177 364 A1 (ALTUNA MDL, S.L) 1 December 2002 (2002-12-01)

## Description

The present invention refers, in general, to a key manipulation system for key cutting machines, that is for machines adapted to make the teeth, slots or grooves that differentiate one key from another and which render them unequivocally compatible with only one lock.

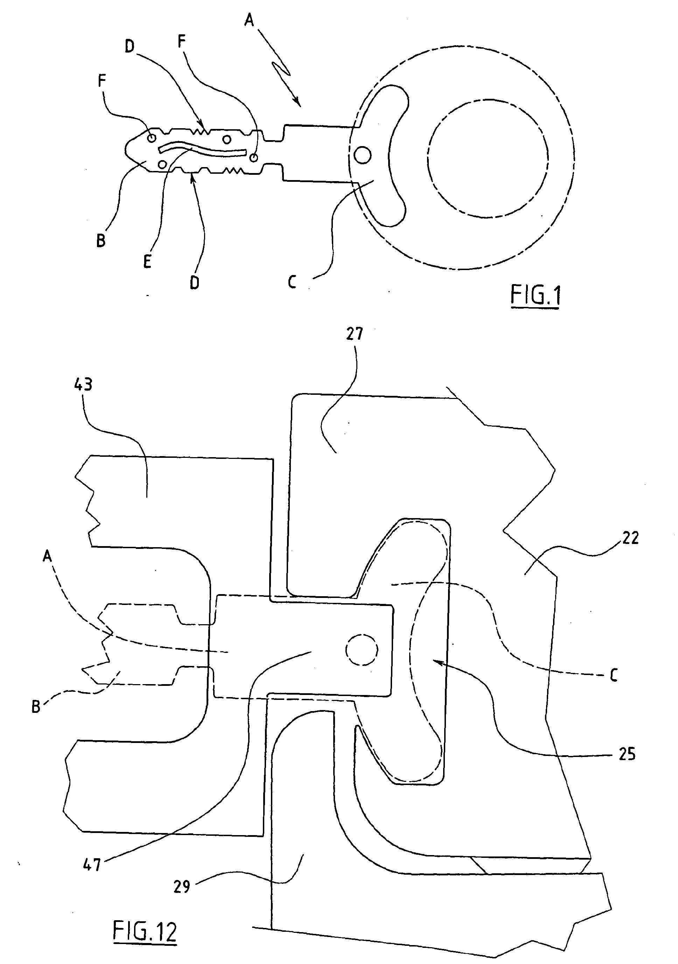

As illustrated in Figure 1 of the attached tables of drawings, a key A generally comprises two parts, of which a first part B, referred to as "blade", which is destined to be inserted inside the lock, and a second part C, referred to as "bow", which is destined to be manipulated by a user to turn the key in the lock.

In particular, key cutting machines are adapted to subject the blade B of the key A to mechanical machining, and are essentially subdivided into two types according to whether they perform side cutting, or end cutting.

With reference to Figure 1, machines belonging to the first type are adapted to machine the opposite edges of the blade B, giving them a typical notched profile D, while machines belonging to the second type are adapted to machine the flat faces of the blade B, making grooves E on them of various shapes ("snake" type cut) and/or recesses F (point or "dimple" cut).

As is known, key cutting machines that perform side cutting like the one disclosed at ES 2177364, generally comprise one or two cutting heads, which are provided with a respective tool, typically a disc milling cutter, and are adapted for simultaneously machining the opposite edges of the key's blade.

In such machines, as a rule, the key manipulation system comprises a distributor device, known as a "plate-type handler", which in turn comprises three plates in a stacked pack, sliding one on top of the other, each one between a forward position and a rear position, and each provided with a holder seat for a key.

The upper plate is adapted to receive a key from a feed loader and transport it to a device able to perform preliminary marking, the intermediate plate is adapted to receive the marked key from the upper plate and advance it to the cutting position, and lastly, the lower plate is adapted to receive the cut key from the intermediate plate and transfer it to a discharge position.

On the other hand, key cutting machines such as the one disclosed at EP 1354654, that perform end cutting generally comprise just one cutting head, which is provided with a tool, typically a slot drill, adapted for point machining the flat faces of the key's blade.

For this reason, the manipulation system in these key cutting machines is generally adapted to both position keys, one at a time, under the cutting heads, and to swivel them so that both of their flat faces, one after the other, face the said cutter.

However, this manipulation system is much slower in operation with respect to an ordinary "plate-type handler" used in machines for side cutting; furthermore, it is also more complicated from the constructional standpoint and normally requires more maintenance.

An object of this invention is that of providing a manipulation system for key cutting machines, and in particular for key cutting machines adapted to perform end cutting, that overcomes the mentioned drawbacks of the known art, i.e. one that is adapted to swivel the key, possesses a high operating speed and is of simple, economic and rational construction.

This object is achieved via a key manipulation system according to claim 1.

Thanks to the proposed solution, the manipulation system according to the invention can be advantageously used in machines for the end cutting of keys, as it allows the keys to be swivelled.

At the same time, this manipulation system conserves the typical qualities of the "plate-type handler", i.e. high operating speed, a high level of automatism and extreme constructional simplicity.

Furthermore, the feed system in question can be advantageously made by using the same parts that form the "plate-type handler", with great saving on resources, or by readapting "plate-type handlers" that have already been produced, and possible already used, with small modifications.

According to a preferred embodiment, said clamping device comprises a revolving vice having a mobile jaw and a fixed jaw, and the intermediate plate of the distributor device is adapted to position the key to be cut between said jaws, with the upper face facing the fixed jaw and the lower face facing the mobile jaw.

Said mobile jaw is adapted to approach the fixed jaw progressively, so as to take the key out of the holder seat on the intermediate plate and to firmly block it, pressure means suitable for keeping the key steady against the mobile jaw itself during said approach being provided.

Furthermore, according to the invention, the intermediate plate comprises means that are adapted to lock the key in holder seat during forward and rearward travel, and which are adapted to release it when said plate is in both the forward position and the rear position.

In this way, if it is in the forward position, the intermediate plate can advantageously hand over a key to be cut to the clamping device, or receive a cut key from the latter, whilst if it is in the rear position, the intermediate plate can release the cut key to the lower discharge plate and accept a new key to be cut from the upper marking plate.

According to a preferred embodiment of the invention, the clamping device comprises a gauge element that, like an end stop, is adapted to receive the key, which advances integrally with the intermediate plate. In this way, said gauge element conveniently stops the key in a predetermined position, wherein it can be correctly engaged by the clamping device.

According to a further preferred embodiment, the intermediate plate, in turn, comprises an end stop element, which is adapted to make contact with the upper plate, so as to stop the same intermediate plate in the forward position when it arrives without a key. In this way, correct positioning of the intermediate plate with respect to the clamping device is guaranteed when the latter repositions the cut key in the holder seat.

The characteristics and constructional strong points of the invention will be evident from the detailed description that follows, made with reference to the figures of the attached tables of drawings that illustrate a preferred embodiment, merely by way of example and in a non-limiting manner, and where:
Figure 1 shows a usual key,
Figure 2 is a side view of a key manipulation system in accordance with the invention, where some details have been sectioned along the line II-II indicated in Figure 3,
Figure 3 is a plan view of the manipulation system in Figure 2,
Figure 4 is Figure 3 shown during the cutting of a key,
Figures 5 to 8 schematically show, in plan, the distribution device of the manipulation system in Figure 2, in the corresponding steps of the operating cycle,
Figures 9 and 10 show a detail of Figure 2, in two separate moments during operation of the key manipulation system,
Figure 11 is an exploded, perspective elevation view of just the distributor device belonging to the manipulation system in Figure 2, and
Figure 12 is a detail of the section along line XII-XII indicated in Figure 9.

The key manipulation system A for a key cutting machine, subject of the present invention, comprises a vertical feed loader 10, which contains an ordered stack of blank keys A, or rather semi-machined with an uncut blade B, which are progressively taken inside an distributor device 20 beneath. Said distributor device 20 comprises three plates in a stacked pack, each having substantially the same thickness of a key A, with an upper plate 21 that is placed directly beneath the loader 10, an intermediate plate 22 that rests on the upper surface 12 of a support base 11, and a lower plate 23 that is housed in a channel made in said support base 11.

Each plate 21, 22, and 23, is adapted to slide independently of the others, between a rear position and a forward position, controlled by a respective actuating jack, 13, 14 and 15.

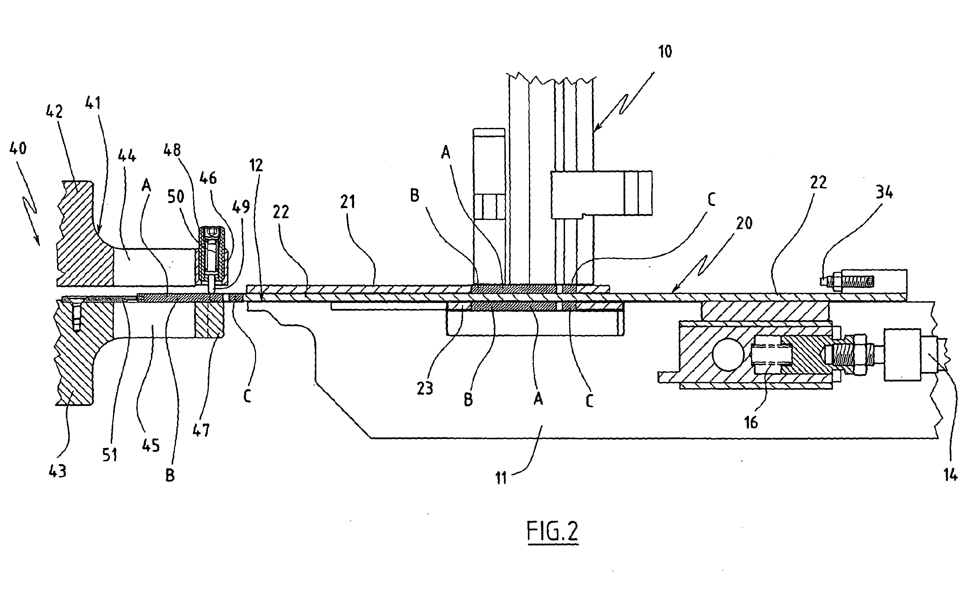

In particular, for reasons that will become clear further on in the description, the intermediate plate 22 is connected to a corresponding jack 14 with the interposition of an elastic element 16, typically a spring, as visible in Figure 2.

The upper 21 and intermediate 22 plates are adapted to slide one on top of the other in the same direction, while the lower plate 23 is adapted to slide in a transversal direction with respect to the first two. Each plate 21, 22, and 23 is provided with a respective holder seat 24, 25 and 26, for a key A.

In particular, the holder seats 24 and 26 of the upper 21 and lower 23 plates consist of a shaped slot having a profile in plan view substantially matching the profile of a key A, such that the latter is enclosed within the plate itself.

The holder seat 25 of the intermediate plate 22, is instead obtained on the front edge of the plate, the profile in plan of which is shaped to conveniently accept just the bow C of the key A, so that the latter is constrained in a cantilever fashion, with the blade B projecting outwards.

The intermediate plate 22 is provided with a gripper system adapted to lock the key A firmly in the respective holder seat 25 during forward and rearward travel, and to release it when the plate 22 is in the forward position and in the rear position.

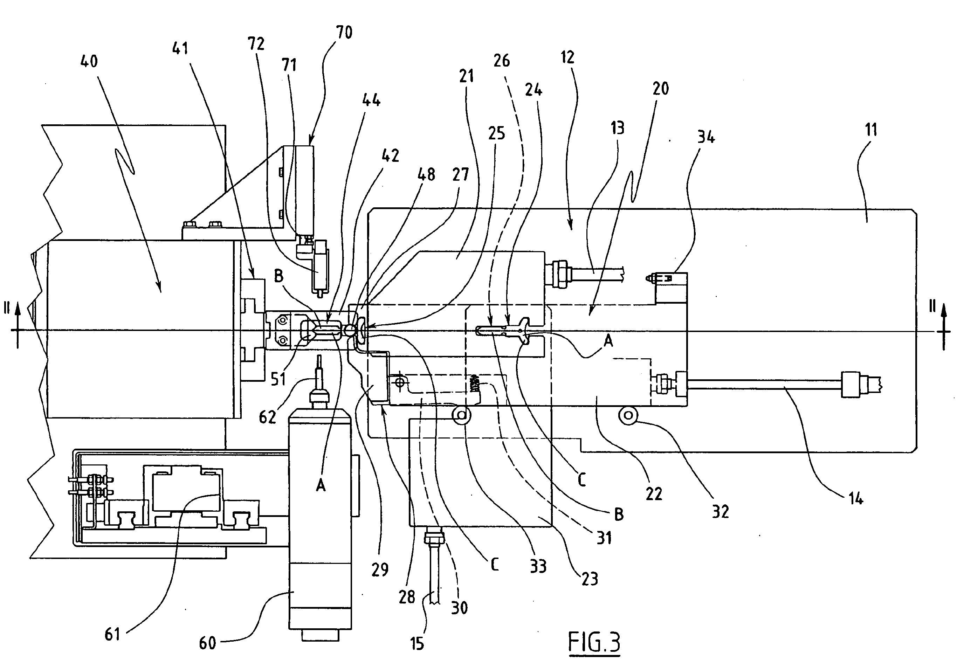

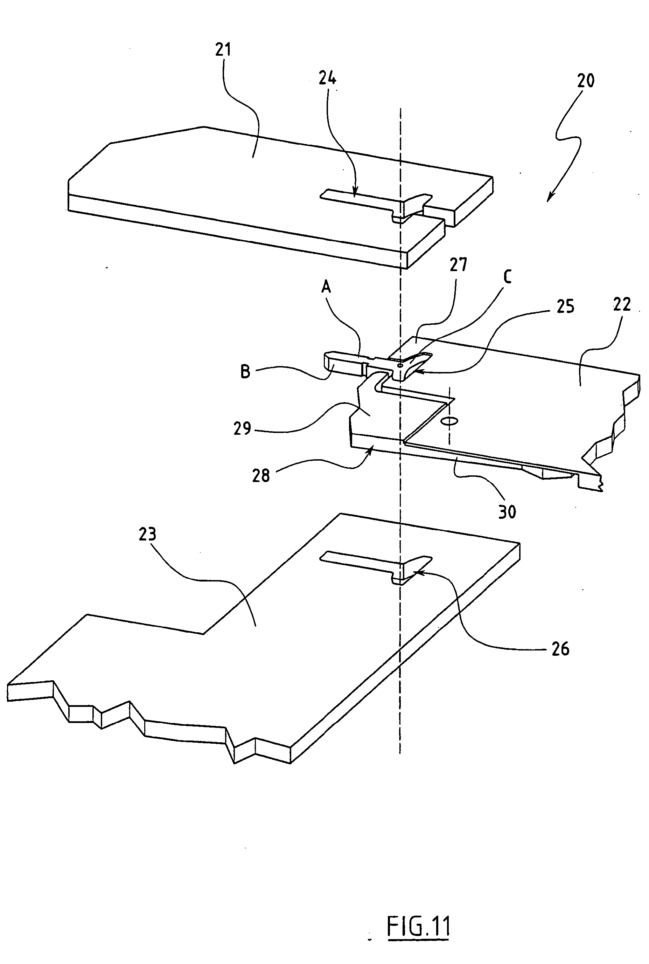

As illustrated in Figures 3, 4, and 11, said gripper system is integrated in the intermediate plate 22 and comprises two shaped jaws 27 and 28 that are adapted for gripping the opposite edges of the key A at the base of the blade B.

The first jaw 27 is fixed, and is obtained on the intermediate plate 22 where the profile in plan of the latter defines the holder seat 25 for the key A, while the second jaw 28 is oscillating and is hinged, like a rocker arm, to the plate 22 itself.

In detail, said oscillating jaw 28 comprises: a shaped flat 29, coplanar with the intermediate plate 22 and having the same thickness as the latter, which opposes the fixed jaw 27 to tighten the grip on the key A, and an arm 30 of reduced thickness, which is hinged below a wing of the plate 22 also having a reduced thickness, so that the plate 22 conserves an overall uniform thickness.

The above-described gripper system is activated by a spring 31, which is solidly fixed to the intermediate plate 22 and is adapted to keep the oscillating jaw 28 pressed in the position in which the grip on the key A is tightened, and by two gauge elements, rear 32 and front 33 respectively.

Said gauge elements 32 and 33 are integral with the support bed 11 so as to be fixed with respect to the plate 22, and are able to make contact with the side edge of the arm 30, when the plate 22 is in the rear position and when it is in the forward position respectively, so as to trigger the rotation of the jaw 28 against the action of the spring 31, causing the gripper system to open.

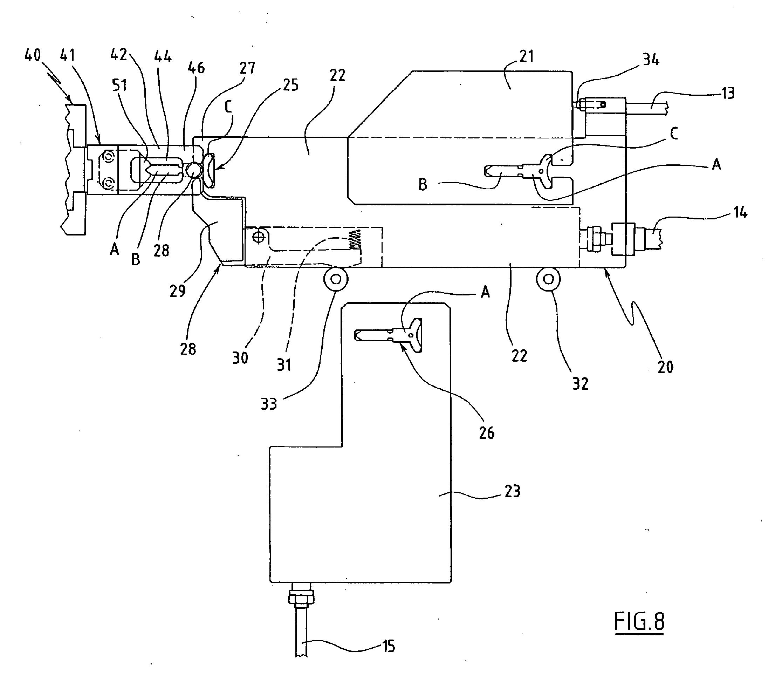

An end stop element 34 is fixed to the rear part of the intermediate plate 22, which element is adapted to stop the plate 22 in the forward position by making contact with the rear edge of the upper plate 21, when the latter is in the rear position (see Fig. 8).

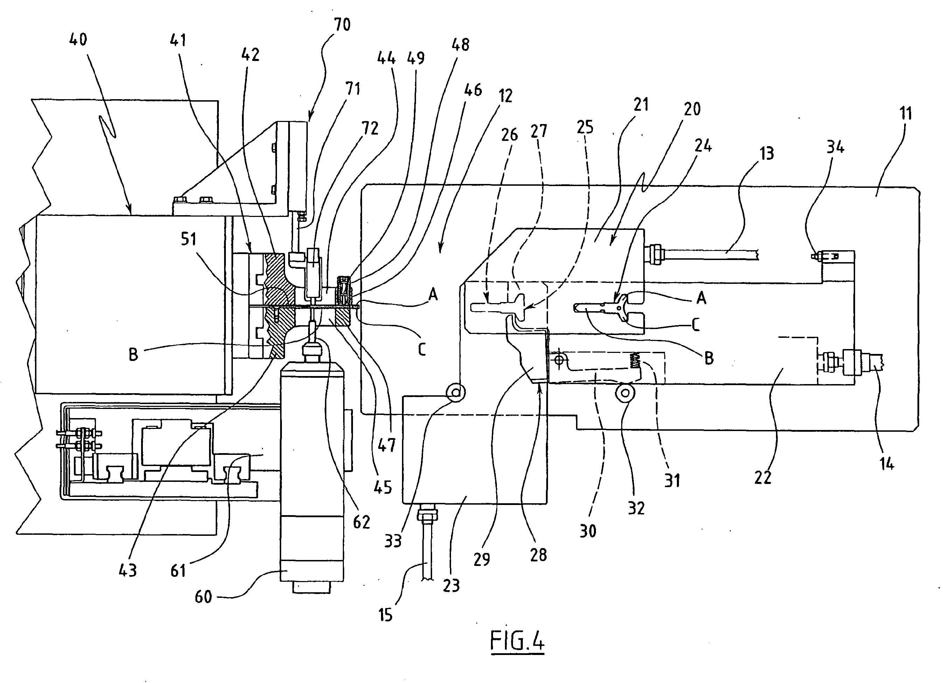

As illustrated in Figures 3 and 4 in particular, the key manipulation system A comprises a clamping device 40 that, actioned by means of known type, is able to take the key A out of the holder seat 25 of the intermediate plate 22, when the latter is in the forward position, and is adapted to rotate in a manner to suitably orientate said key A with respect to a cutting head 60.

Said clamping device 40 comprises a revolving vice 41 comprising a fixed upper jaw 42 and a mobile lower jaw 43, which is adapted to approach said fixed jaw 42 to tighten the grip of the vice 41.

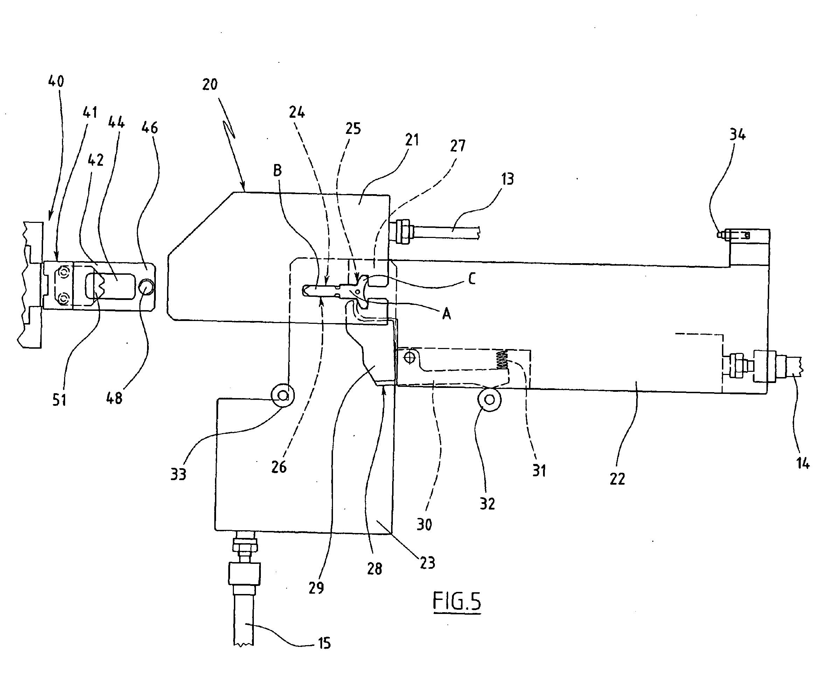

The revolving vice 41 comprises a gauge element 51, inserted between the fixed 42 and mobile jaws 43, that, like an end stop, is able to make contact with the tip of the key A that integrally advances with the intermediate plate 22, so as to stop it in a predetermined position between the jaws 42 and 43 (see Figs. 5 to 8).

In particular, each jaw 42 and 43 has an eyelet shape with a central opening, 44 and 45 respectively, passing through the thickness, and a head anvil, 46 and 47 respectively, positioned at the end (see Figs. 4, 9 and 10). The head anvils 46 and 47 are adapted to grip the bow C of the key A carried by the intermediate plate 22, such that the blade B protrudes in the opposing apertures 44 and 45, and thus its flat faces become accessible to the cutting head 60.

In detail, as illustrated in Figure 12, since the bow C of the key A is held in the seat 25 of the intermediate plate 22, the head anvil 47 of the mobile jaw 43 is conveniently shaped to be able to slide inside said seat 25 during the approach to the fixed jaw 42, edging out the key A without interfering with the intermediate plate 22.

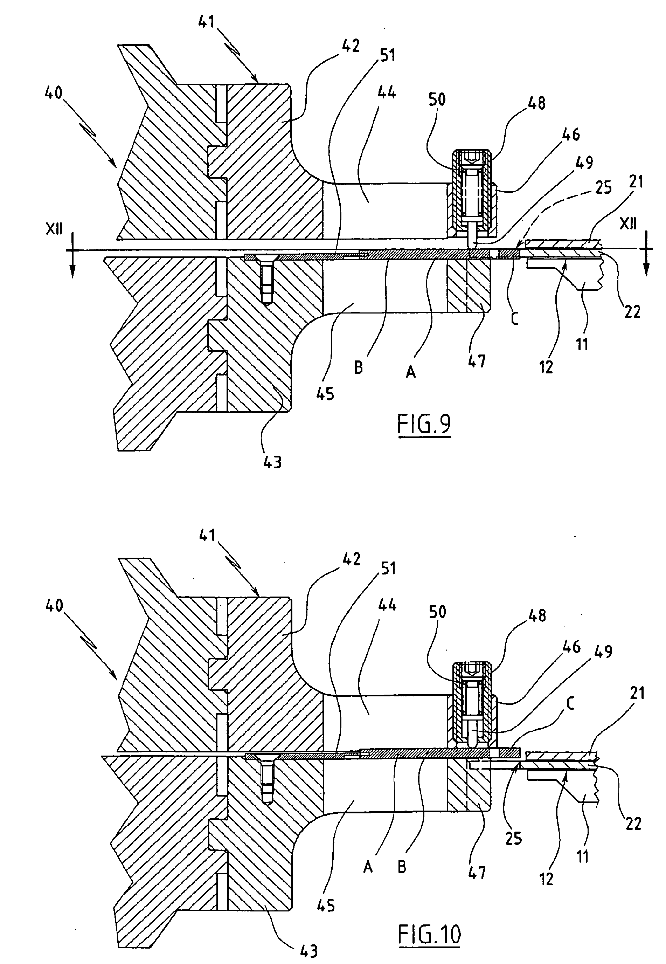

As illustrated in Figures 9 and 10, in correspondence to the head anvil 46, the fixed jaw 42 is provided with pressure means adapted for keeping the key A pressed on the anvil 47 of the mobile jaw 43 during the approach of the latter.

Said pressure means comprise a hollow guide body 48 fixed inside a corresponding seat obtained in the head anvil 46, which contains a sliding pin 49 projecting from the hollow body 48 and a spring 50 that acts on said pin 49, to keep it pressed against the upper face of the key A.

As visible in Figures 3 and 4, the already mentioned cutting head 60 is carried by a per se known articulated arm 61, and comprises a cutting tool 62, typically a milling cutter, which is adapted to perform end cutting on both faces of the blade B of the key A, through the pass-through apertures 44 and 45, of the fixed 42 and mobile 43 jaws respectively.

In particular, during cutting, the tool 62 exerts thrust that causes flexure in the blade B of the key A; for this reason, a device 70 that is able to provide support for the blade B of the key A is provided on the opposite side with respect to the cutting head 60, which counters the thrust exerted by the tool 62 and prevents the said flexure.

Said counter device 70 comprise a sliding arm 71 adapted to move a damped needle 72, destined to stay in contact with the opposite face of the key A to that being machined, towards/away from the key A.

The operating cycle of the feed system for the keys A on a key cutting machine, subject of the present invention, is described in the following with the aid of Figures 5 to 8 of the attached tables of drawings.

Conventionally, the start of the cycle is set when the plates 21, 22 and 23 are arranged as shown in Figure 5, i.e. when the upper plate 21 and the lower plate 23 are both in the forward position, while the intermediate plate 22 is in the rear position.

In this configuration, the holder seats 24, 25 and 26 of the three plates are perfectly superimposed on one another, vertically below the loader 10, and the gripper device of the intermediate plate 22 is open, so as to allow the vertical sliding of the stack of keys A and, at the same time, the passage of a key A from one plate to another.

More in detail, the blank key A positioned at the bottom of the stack is accepted in the holder seat 24 of the upper plate 21, the marked key A that occupies said seat 24 passes to the holder seat 25 of the intermediate plate 22, and the cut key A that occupies the seat 25 passes to the seat 26 of the lower plate 23.

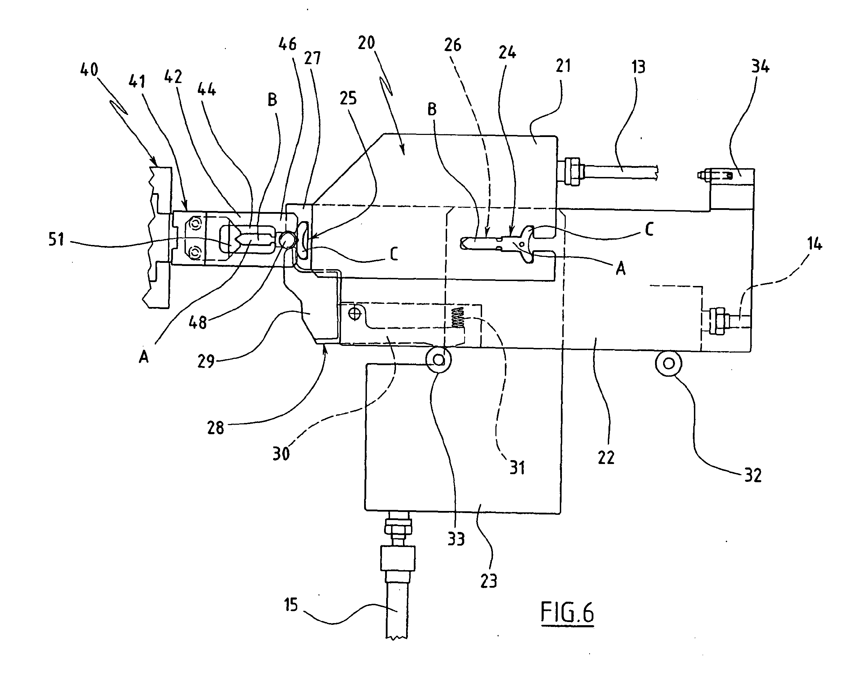

At this point, as illustrated in Figure 6, the intermediate plate 22 is made to advance: the gripper system locks the key A to be cut and the latter slides between the upper surface 12 of the support bed 11 and the upper plate 21, which remains stationary, until it projects completely from them, to be engaged by the revolving vice 41 (see also Figs. 2 and 9).

During the forward travel of the intermediate plate 22, the revolving vice 41 is in a rest position, i.e. with the jaws 42 and 43 reciprocally apart and one above the other.

The key A progressively moves between said jaws 42 and 43, with the upper face facing the fixed jaw 42 and the lower face facing the mobile jaw 43. More in particular, the lower face of the key A slides in contact with the mobile jaw 43, while the upper face slides in contact with the pin 49 carried by the fixed upper jaw 42.

The forward travel of the intermediate plate 22 stops when the tip of the key A makes contact with the gauge element 51 placed between the jaws 42 and 43.

In this way, the key A is correctly positioned with respect to the vice 41, but, at the same time, it is subjected to a peak load that, transmitted to the thin intermediate plate 22, could cause the deformation of the latter.

However, it is wished to underline that, thanks to the invention, such peak load is limited by the elastic element 16 that connects the jack 14 to the intermediate plate 22, which essentially functions as a damper. Furthermore, in this step, the front part of the intermediate plate 22 lies between the surface 12 of the bed 11 and the upper plate 21 that is in the forward position, and is thus stiffened.

At the last moment, when the intermediate plate 22 reaches the forward position, the fixed front gauge element 33 opens the gripper device freeing the key A, which is therefore only blocked between the mobile lower jaw 43 and the pin 49. At this point, as illustrated in Figure 10, the mobile jaw 43 rises and edges out the key A from the holder seat 25 of the intermediate plate 22, then lifts it, and finally blocks it firmly against the fixed jaw 42.

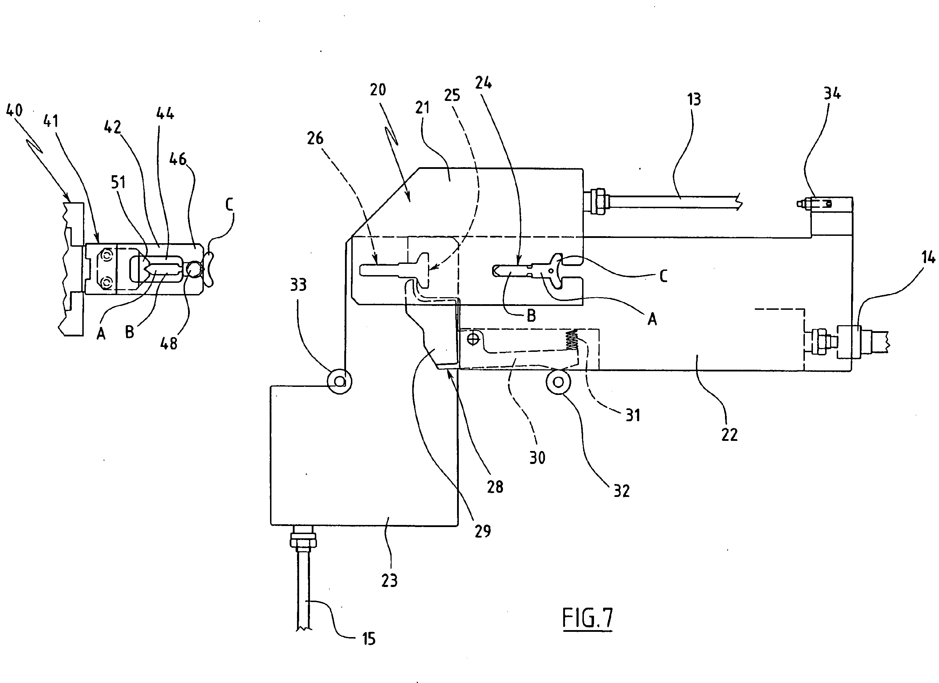

With the key A thus blocked in a raised and horizontal position, as shown in Figure 7, the intermediate plate 22 moves backs without a key and, simultaneously, the upper plate 21 moves to the rear position, so as to feed the key A held in its seat 24 to per se known marking devices and not shown.

Meanwhile, as visible in Figure 4, the vice 41 rotates and orientates the key A to be cut with respect to the cutting head 60, so that the tool 62 can machine both of the flat surfaces of the blade B of the key A and then, when machining is finished, reposition the cut key A in a horizontal position, but still raised and gripped between the jaws 42 and 43.

At this point, while the upper plate 21 remains stationary in the rear position, as illustrated in Figure 8, the intermediate plate 22 performs a new forward travel movement without a key, stopping on the forward position when its end stop 34 makes contact with the rear edge of the upper plate 21.

The mobile jaw 43 of the vice 41 descends and repositions the cut key A inside the holder seat 25 of the intermediate plate 22.

The intermediate plate 22 moves back and the gripper device releases the cut key A, which is thus extracted from the vice 41.

At this point, the upper 21 and intermediate 22 plates simultaneously return to their forward and rear positions respectively, and the lower plate 23, which in the meantime has performed a rearward travel movement and has discharged the key A that occupied the holder seat 26 into opportune collection means, moves to the forward position.

In this way, the distribution device 20 resumes the initial configuration and is ready for a new cycle.

## Claims

1. Key (A) manipulation system for a key cutting machine, which comprises a distributor device (20) comprising at least three plates (21, 22, 23) in a stacked pack, sliding one on top of the other, each one between a rear position and a forward position, and each provided with a holder seat (24, 25, 26) for a key (A), in which an upper plate (21) is adapted to receive a key (A) from a feed loader (10) and make it move back to a marking position, an intermediate plate (22) is able to receive the marked key (A) from the upper plate (21) and make it advance to a cutting position, and a lower plate (23) is able to receive the cut key (A) from the intermediate plate (22) and make it move to a discharge position, **characterized in that** it comprises a clamping device (40) that is adapted to take the key (A) out of the holder seat (25) of said intermediate plate (22) when the latter is in the forward position, is adapted to rotate in a manner to suitably orientate said key (A) with respect to the cutting tools (62), and is then adapted to reposition the cut key (A) in the holder seat (25) of the intermediate plate (22) when the latter is in the forward position.

2. Key manipulation system according to claim 1, **characterized in that** the clamping device (40) comprises a revolving vice (41) having a mobile jaw (43) and a fixed jaw (42), and the intermediate plate (22) is able to position the key (A) between said jaws (42 and 43), with the upper face facing the fixed jaw (42) and the lower face facing the mobile jaw (43), said mobile jaw (43) being able to approach the fixed jaw (42) so as to take the key (A) out of the holder seat (25) of the intermediate plate (22) and to firmly lock it.

3. Key manipulation system according to claim 2, **characterized in that t**he revolving vice (41) comprises pressure means (48, 49 and 50), able to keep the key (A) fixed on the mobile jaw (43), during the approach of the latter to the fixed jaw (42).

4. Key manipulation system according to claim 3, **characterized in that** said pressure means comprise a pin (49) sliding in a seat obtained in the fixed jaw (42), and a spring (50) able to act on said pin (49), pressing it against the upper face of the key (A).

5. Key manipulation system according to claim 1, **characterized in that** the intermediate plate (22) comprises means for locking (27 and 28) the key (A) in the holder seat (25), that are able to lock the key (A) during the forward and rearward travel of the intermediate plate (22), and to release it when said intermediate plate (22) is in either the forward position or in the rear position.

6. Key manipulation system according to claim 5, **characterized in tha**t said locking means comprise a gripper system obtained as an integral part of the intermediate plate (22), which comprises two shaped jaws (27 and 28) able to clamp onto the edge of the key (A), of which there is a fixed jaw (27) and a jaw (28) oscillating between a closed position in which the key (A) is gripped and an open position in which it is released.

7. Key manipulation system according to claim 6, **characterized in that** said oscillating jaw (28) is hinged on the intermediate plate like a rocker arm, and is actioned by a spring (50) able to constrain it in the closed position, and by two gauge elements (32 and 33) that, fixed with respect to the intermediate plate (22), are able to make contact with the oscillating jaw (28) causing it to open when the plate (22) is in the forward position and in the rear position respectively.

8. Key manipulation system according to claim 1, **characterized in that** the clamping device (40) comprise a gauge element (51) that, like an end stop, is able to make contact with the tip of the key (A) that integrally advances with the intermediate plate (22), stopping it in a predetermined position.

9. Key manipulation system according to claim 1, **characterized in that** the intermediate plate (22) comprises an end stop element (34), which is able to stop said intermediate plate (22) in the forward position when it completes forward travel without the key (A) in the holder seat (25), so as to guarantee correct positioning with respect to the clamping device (40).

10. Key manipulation system according to claim 9, **characterized in that** said end stop element (34) is able to make contact on an edge of the upper plate (21), when the latter is in the rear position.

11. Key manipulation system according to claim 1, **characterized in that** it comprises a device (70) able the counter the thrust exerted on the key (A) by the cutting tools (62) during the cutting process, said counter device (70) comprising a damped needle (72), destined to stay in contact with the opposite face of the key (A) to that being machined.

## Patentansprüche

1. System (A) zur Handhabung von Schlüsseln für eine Schlüsselschneidmaschine, welches eine Verteilungsvorrichtung (20) aufweist, die mindestens drei Platten (21,22,23) in einem übereinander angeordneten Paket aufweist, die jeweils oben aufeinander zwischen einer hinteren Position und einer vorderen Position hin und her gleiten und die jeweils mit einem Haltesitz (24,25,26) für einen Schlüssel (A) versehen sind, wobei eine obere Platte (21) dafür vorgesehen ist, einen Schlüssel (A) von einem Zufuhrladeelement (10) aufzunehmen und es dazu zu veranlassen, sich in eine Markierungsposition zurück zu bewegen, wobei eine Zwischenplatte (22) in der Lage ist den markierten Schlüssel (A) von der oberen Platte (21) zu empfangen und ihn dazu zu veranlassen, in eine Schneidposition vorzurücken, und wobei eine untere Platte (23) in der Lage ist, den geschnittenen Schlüssel (A) von der Zwischenplatte (22) zu empfangen und ihn zu veranlassen, sich in eine Entladeposition zu bewegen,
**dadurch gekennzeichnet , dass** es eine Klemmvorrichtung (40) aufweist, die dafür vorgesehen ist, den Schlüssel (A) aus dem Haltesitz (25) der Zwischenplatte (22) herauszunehmen, wenn sich die Letztere in der vorderen Position befindet, dafür vorgesehen ist, den Schlüssel (A) passend im Verhältnis zu den Schneidwerkzeugen (62) zu drehen, und dann dafür vorgesehen ist, den Schlüssel (A) in dem Haltesitz (25) der Zwischenplatte (22) neu zu positionieren, wenn sich die Letztere in der vorderen Position befindet.

2. System zur Handhabung von Schlüsseln nach Anspruch 1,
**dadurch gekennzeichnet, dass** die Klemmvorrichtung (40) eine sich drehende Schraubzwinge (41) mit einer bewegbaren Klemmbacke (43) und einer feststehenden Klemmbacke (42) aufweist, und dass die Zwischenplatte (22) in der Lage ist, den Schlüssel (A) zwischen den Klemmbacken (42 und 43) zu positionieren, wobei die Oberseite der feststehenden Klemmbacke (42) und die Unterseite der bewegbaren Klemmbacke (43) zugewandt ist, wobei die bewegbare Klemmbacke (43) in der Lage ist, sich so an die feststehende Klemmbacke (42) anzunähern, dass der Schlüssel (A) aus dem Haltesitz (25) der Zwischenplatte (22) genommen und fest arretiert werden kann.

3. System zur Handhabung von Schlüsseln nach Anspruch 2,
**dadurch gekennzeichnet , dass** die sich drehende Schraubzwinge (41) Druckausübungseinrichtungen (48,49 und 50) aufweist, die in der Lage sind, den Schlüssel (A) fixiert auf der bewegbaren Klemmbacke (43) zu halten, und zwar während der Annäherung der Letzteren an die feststehende Klemmbacke (42).

4. System zur Handhabung von Schlüsseln nach Anspruch 3,
**dadurch gekennzeichnet , dass** die Druckausübungseinrichtungen einen Stift (49), der in einem in der feststehenden Klemmbacke (42) erhaltenen Sitz gleitet, und eine Feder (50) umfassen, die zum Einwirken auf den Stift (49) in der Lage ist, wobei sie ihn gegen die Oberseite des Schlüssels (A) drückt.

5. System zur Handhabung von Schlüsseln nach Anspruch 1,
**dadurch gekennzeichnet , dass** die Zwischenplatte (22) Einrichtungen zum Arretieren (27 und 28) des Schlüssels (A) in dem Haltesitz (25) umfasst, die in der Lage sind, den Schlüssel (A) während der Vorwärts- und Rückwärtsbewegung der Zwischenplatte (22) zu arretieren und ihn freizugeben, wenn sich die Zwischenplatte (22) entweder in der vorderen oder in der hinteren Position befindet.

6. System zur Handhabung von Schlüsseln nach Anspruch 5,
**dadurch gekennzeichnet , dass** die Arretierungseinrichtungen ein Greifersystem umfassen, welches als ein integraler Bestandteil der Zwischenplatte (22) erhalten wird, die zwei geformte Klemmbacken (27 und 28) aufweist, die in der Lage sind, sich auf die Kante des Schlüssels (A) zu klemmen, wobei eine feststehende Klemmbacke (27) und eine Klemmbacke (28) vorhanden ist, die zwischen einer geschlossenen Position, in welcher der Schlüssel (A) ergriffen wird, und einer geöffneten Position, in welcher er freigegeben wird, oszilliert.

7. System zur Handhabung von Schlüsseln nach Anspruch 6,
**dadurch gekennzeichnet, dass** die oszillierende Klemmbacke (28) wie ein Kipphebel gelenkig auf der Zwischenplatte angebracht ist und durch eine Feder (50) betätigt wird, um sie in die geschlossene Position zu zwingen, und durch zwei Messelemente (32 und 33), die im Verhältnis zu der Zwischenplatte (22) feststehend in der Lage sind, mit der oszillierenden Klemmbacke (28) in Kontakt zu gehen und sie zum Öffnen zu veranlassen, wenn sich die Platte (22) jeweils in der vorderen Position und in der hinteren Position befindet.

8. System zur Handhabung von Schlüsseln nach Anspruch 1,
**dadurch gekennzeichnet, dass** die Klemmvorrichtungen (40) ein Messelement (51) umfassen, welches wie ein Endanschlag dazu in der Lage ist, mit der Spitze des Schlüssels (A) in Kontakt zu gehen, der einstückig mit der Zwischenplatte (22) vorrückt und sie in einer zuvor festgelegten Position anhält.

9. System zur Handhabung von Schlüsseln nach Anspruch 1,
**dadurch gekennzeichnet , dass** die Zwischenplatte (22) ein Endanschlagelement (34) aufweist, welches zum Anhalten der Zwischenplatte (22) in der vorderen Position in der Lage ist, wenn sie die Vorwärtsbewegungsstrecke ohne den Schlüssel (A) in dem Haltesitz (25) durchlaufen hat, um die korrekte Positionierung im Verhältnis zu der Klemmvorrichtung (40) sicherzustellen.

10. System zur Handhabung von Schlüsseln nach Anspruch 9,
**dadurch gekennzeichnet, dass** das Endanschlagselement (34) in der Lage ist, mit der Kante der oberen Platte (21) in Kontakt zu gehen, wenn sich die Letztere in der hinteren Position befindet.

11. System zur Handhabung von Schlüsseln nach Anspruch 1,
**dadurch gekennzeichnet, dass** es eine Vorrichtung (70) aufweist, die in der Lage ist, einen Gegendruck gegen den Druck auszuüben, der während des Schneidprozesses durch die Schneidwerkzeuge (62) auf den Schlüssel (A) ausgeübt wird, wobei die Gegendruckausübungsvorrichtung (70) eine gedämpfte Nadel (72) aufweist, die dazu bestimmt ist, mit der Seite des Schlüssels (A) in Kontakt zu stehen, die der zu bearbeitenden gegenüberliegt.

## Revendications

1. Système de manipulation de clé (A) pour une machine à tailler les clés, qui comprend un dispositif de distribution (20) composé d'au moins trois plaques (21, 22, 23) empilées, coulissant l'une au-dessus de l'autre, chacun entre une position arrière et une position avant, et chacune dotée d'un logement de support (24, 25, 26) pour une clé (A), dans lequel une plaque supérieure (21) est conçue pour recevoir une clé (A) provenant d'un chargeur d'alimentation (10) et la fait reculer dans une position de marquage, une plaque intermédiaire (22) est capable de recevoir la clé marquée (A) de la plaque supérieure (21) et la fait avancer dans une position de découpe, et une plaque inférieure (23) est capable de recevoir la clé (A) découpée de la plaque intermédiaire (22) et la fait déplacer vers une position de décharge, **caractérisé par le fait qu'**il comprend un dispositif de serrage (40) qui est conçu pour sortir la clé (A) du logement de support (25) de ladite plaque intermédiaire (22) lorsque cette dernière est en position avant, qui est conçu pour faire tourner de manière à orienter correctement ladite clé (A) par rapport aux outils de découpe (62), et qui est ensuite conçu pour repositionner la clé (A) découpée dans le logement de support (25) de la plaque intermédiaire (22) lorsque cette dernière est en position avant.

2. Système de manipulation de clé selon la revendication 1, **caractérisé par le fait que** le dispositif de serrage (40) comprend un étau tournant (41) ayant une mâchoire mobile (43) et une mâchoire fixe (42), et que la plaque intermédiaire (22) est capable de positionner la clé (A) entre lesdites mâchoires (42 et 43), avec la face supérieure tournée vers la mâchoire fixe (42) et la face inférieure tournée vers la mâchoire mobile (43), ladite mâchoire mobile (43) étant capable de s'approcher de la mâchoire fixe (42) afin de sortir la clé (A) du logement de support (25) de la plaque intermédiaire (22) et de la verrouiller fermement.

3. Système de manipulation de clé selon la revendication 2, **caractérisé par le fait que** l'étau tournant (41) comprend des moyens de pression (48, 49 et 50) capables de tenir la clé (A) fixée sur la mâchoire mobile (43) durant l'approche de cette dernière vers la mâchoire fixe (42).

4. Système de manipulation de clé selon la revendication 3, **caractérisé par le fait que** lesdits moyens de pression comprennent une pointe (49) coulissant dans un siège obtenu dans la mâchoire fixe (42) et un ressort (50) capable d'agir sur ladite pointe (49) en l'enfonçant contre la face supérieure de la clé (A).

5. Système de manipulation de clé selon la revendication 1, **caractérisé par le fait que** la plaque intermédiaire (22) comprend des moyens pour verrouiller (27 et 28) la clé (A) dans le logement de support (25) qui sont capables de verrouiller la clé (A) durant la course vers l'avant et vers l'arrière de la plaque intermédiaire (22) et de la relâcher lorsque ladite plaque intermédiaire (22) se trouve soit en position avant, soit en position arrière.

6. Système de manipulation de clé selon la revendication 5, **caractérisé par le fait que** lesdits moyens de verrouillage comprennent un système de saisie faisant partie intégrante de la plaque intermédiaire (22), qui comprend deux mâchoires profilées (27 et 28) capable de se serrer sur le bord de la clé (A) et composées d'une mâchoire fixe (27) et d'une mâchoire oscillante (28) entre une position fermée dans laquelle la clé (A) est saisie et une position ouverte dans laquelle elle est relâchée.

7. Système de manipulation de clé selon la revendication 6, **caractérisé par le fait que** ladite mâchoire oscillante (28) est fixée par une charnière sur la plaque intermédiaire, comme un culbuteur, et qu'elle est actionnée par un ressort (50) capable de la contraindre en position fermée, et par deux éléments de mesure (32 et 33) qui sont fixes par rapport à la plaque intermédiaire (22) et sont capables d'entrer en contact avec la mâchoire oscillante (28), entraînant son ouverture lorsque la plaque (22) est respectivement en position avant et en position arrière.

8. Système de manipulation de clé selon la revendication 1, **caractérisé par le fait que** le dispositif de serrage (40) comprend un élément de mesure (51) qui est capable, comme une butée, d'entrer en contact avec la pointe de la clé (A) qui avance intégralement avec la plaque intermédiaire (22) et de l'arrêter dans une position prédéterminée.

9. Système de manipulation de clé selon la revendication 1, **caractérisé par le fait que** la plaque intermédiaire (22) comprend un élément de butée (34) qui est capable d'arrêter ladite plaque intermédiaire (22) en position avant lorsqu'elle termine la course vers l'avant sans la clé (A) dans le logement de support (25) afin de garantir un positionnement correct par rapport au dispositif de saisie (40).

10. Système de manipulation de clé selon la revendication 9, **caractérisé par le fait que** ledit élément de butée (34) est capable d'entrer en contact avec un bord de la plaque supérieure (21) lorsque cette dernière est en position arrière.

11. Système de manipulation de clé selon la revendication 1, **caractérisé par le fait qu'**il comprend un dispositif (70) capable de compenser la poussée exercée sur la clé (A) par les outils de découpage (62) durant le processus de découpe, ledit dispositif de compensation (70) comprenant une aiguille amortie (72) destinée à rester en contact avec la face opposée de la clé (A) à celle qui est usinée.
